# EUROPEAN PATENT SPECIFICATION

(11) **EP 0 476 773 B1**
(45) Date of publication and mention of the grant of the patent: **23.02.1994**
(21) Application number: 91202372.8
(22) Date of filing: 17.09.1991
(51) Int. Cl.: C02F 1/52, C02F 1/58

(54) **Method for the removal of fluoride from waste water**
Verfahren für die Entfernung von Fluoriden aus Abwasser
Procédé pour éliminer des fluorures d'eau usée

(30) Priority: 18.09.1990 NL 9002056
(43) Date of publication of application: 25.03.1992
(73) Proprietor: DHV Water B.V., NL-3818 EX Amersfoort (NL)
(72) Inventor: Dijkhorst, Jacobus, NL-3711 BR Austerlitz (NL)
(74) Representative: Kupecz, Arpad

(56) References cited:
- GB-A- 2 021 087
- NL-A- 8 103 120
- PATENT ABSTRACTS OF JAPAN, vol. 7, no. 7 (C-144)(1152), 12 January 1983 & JP-A-57 165 087 (HITACHI PLANT KENSETSU). Oct. 1982
- PATENT ABSTRACTS OF JAPAN, vol.8,no.52,09 March, 1984 & JP-A-58 207 990 (MITSUBISHI JUGOKYO) 3. Dec. 1983

## Description

The invention relates to a method for the removal of fluoride from waste water in the form of a poorly soluble salt by mixing the waste water with a reagent.

The removal of fluoride from waste water can be carried out by mixing the fluoride-containing waste water for instance with calciumchloride (CaCl₂), whereby the calciumfluoride precipitates.

Such a method could for instance be carried out by applying the so-called Funda filter system, which consists of two reactor tanks and one separator tank. In the first reactor tank calciumchloride and an acid or base are added to the waste water to be treated, whereby the fluoride precipitates at a suitable pH in the form of calciumfluoride. The flocculent precipitate formed hereby is transferred to a second reactor tank in order to promote the growth of calciumfluoride flocks. Subsequently the calciumfluoride flocks thus treated are separated in the separator tank from the waste water in the form of sludge which contains voluminously much water, and from which prior to whether storage, or removal or the winning from it of fluoride, the water must be thoroughly drained off.

It appeared that the waste water treated according to the known method still contains too high a concentration of dissolved fluoride. Usually, for example, the concentration of fluoride in waste water treated in this way is 20-100 ppm.

Moreover, the known method is costly, laborious and takes up a lot of space.

It is the aim of the invention to supply a method that effectively removes the above-mentioned disadvantages.

For this purpose the method according to the invention contains the characterizing part, that the fluoride-containing waste water is thoroughly mixed with the water soluble reagent at a suitably pH in a reactor of the fluidized bed type, which comprises an appropriate, non-magnetic bed material, which is sand, with an appropriate grain size on which the fluoride salt crystallizes exclusively out, whereby the bed material containing crystalline fluoride salt is from time to time removed from the reactor, and new bed material is added to the reactor.

The method according to the invention is especially suitable for the removal of fluoride from waste water, while moreover the drawbacks attached to the known method are effectively removed.

According to the present invention the removal of fluoride can take place quickly, that is to say within a few minutes, while the concentration of fluoride in the treated waste water lies below 20 ppb, which is considerably lower than with the known method.

Another advantage of the present method is that a granular product is obtained with a very low water content of about 0.5%. The thus obtained granular material may be employed, without further dehydration, for various industrial purposes, such as for the production of HF.

Moreover, due to the low water content, the volume of the grains formed proves to be by a factor of 50 lower than the sludge obtained according to the known method.

An essential aspect of the present method is that the work is carried out under circumstances such that the bed material is in a fluidized condition, causing a crystallization exclusively of the fluoride salt at or in the bed material.

According to the invention a calcium- or magnesium-containing solution, such as calciumchloride is used as the water soluble reagent.

The method according to the invention should take place in the reactor at a pH of 3-14.

The pH of the waste water in the reactor must be higher than 3, as otherwise the fluoride will form hydrogen.

The desired pH is adjusted with an acid or a base.

An advantageous bed material, according to the invention, is sand, preferably with a grain size of 0.1-0.3 mm.

It is observed that the sand grains of the particle size of 0.1-0.3 mm as mentioned can grow to a particle size of 1-3 mm, which grains are from time to time removed from the reactor.

The fluoride may be won in the usual manner from the grains thus removed.

The grains that have grown and which are removed from time to time, must periodically be replenished, in order to guarantee the maintenance of a well functioning fluidized bed, which is essential for the present method.

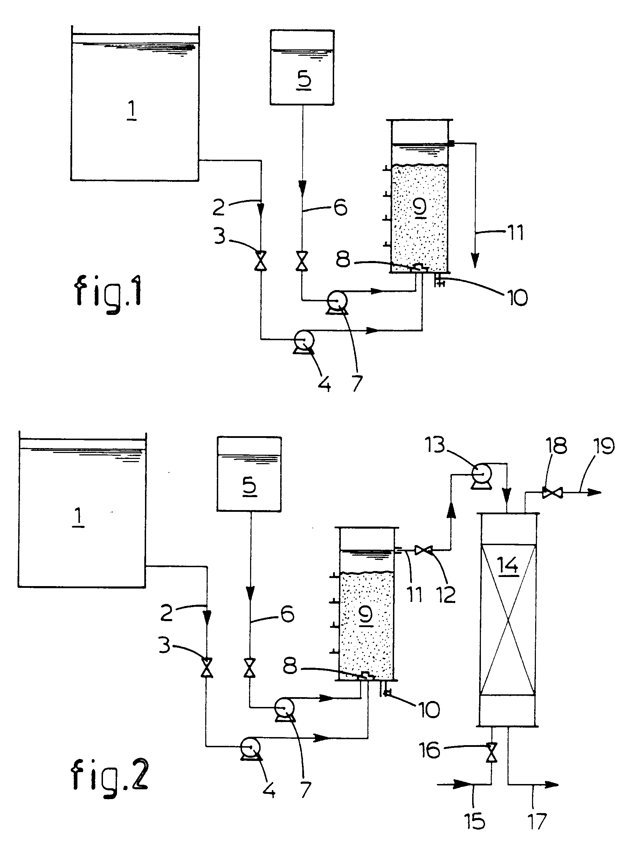

The method according to the invention, in which fluoride is removed, is now further elucidated by Fig. 1 and 2.

The waste water to be treated may for instance have the following composition:
- F⁻ =: 10 - 100.000 ppm
- K⁺ =: 1 - 100.000 ppm
- Na⁺ =: 10 - 100.000 ppm
- pH =: 4-5
- T =: 5-30°C
- SS =: 10 - 200 ppm

JP-A-58207990 discloses a process for the removal of fluoride by letting water to be treated flow through a filter layer composed of a magnetic body in a powdery state or the like on which an insoluble calcium film is formed under the condition that its downstream part is fixed in a magnetic field.

### EXAMPLE I

Waste water of the above-mentioned composition was treated at an ambient temperature according to the method of the invention, using the installation as represented in Fig. 1. The waste water was stored in tank 1 and from there introduced into the fluidized bed reactor 9 via pipe 2, valve 3 and pump 4. Via pipe 6 and pump 7 a watery CaCl₂ solution was pumped from tank 5 also into the reactor 9. The pumps 4 and 7 are superfluous if respectively the waste water and the CaCl₂ possess sufficient gravity. The waste water as well as the watery CaCl₂ solution were introduced into the reactor 9 with the aid of the distributor 8 in a manner such that no blockage in the inlet opening occurs. The inlet velocity of the two fluids is such, that the bed material present in the reactor 9, in this case sand grains with a particle size of 0.1-0.3 mm, was brought into and maintained in a fluidized condition.

The formed calciumfluoride crystallizes out at the surface of the sand grains, causing them to grow to a grain size of 1-3 mm. From time to time these grains were removed from the reactor via outlet opening 10. Finally, the thus treated waste water, which contained only 20-50 ppm F, was drained away via pipe 11.

As a result of the fluctuating concentration of fluoride in the waste water and in connection with saving reagents, the measuring of the calciumchloride dosage was preferably controlled via an on-line analyzer.

### EXAMPLE II

The procedure of Example I was repeated, on the understanding, that the waste water treated according to the present method, received after-treatment before being discharged onto a sand filter.

The friction developing in the sand grains carrying calciumfluoride can result in the formation of calciumfluoride grit in the reactor. In suspension, this grit may be carried along with the treated waste water, which could be undesirable. In order to avoid this it was advantageous to use a filter column 14, which connected to the reactor 9. The thus treated waste water along with any grit that might be present in it, was conducted via pipe 11, valve 12 and pump 13 into the filter column 14, which was filled with sand having a diameter of 0.5-0.6 mm, or, with regard to a better pressure build-up, with a mixture of anthracite with a particle size of 0.6-1.6 mm and sand with a particle size of 0.4-0.8 mm.

After passing through the filter column 14, the filtered waste water was drained off via pipe 17. The thus treated waste water has a fluoride content of 5-10 ppm and in addition is free of the said grit.

From time to time the filter column 14 can be rinsed via pipe 15 and valve 16, whereby the rinsing water is drained off via pipe 19 and valve 18.

Alternatively, a similar filter can be additionally placed between the neutralization tank 1 and the reactor 9 to catch any solid components present in the waste water before the waste water reaches the reactor 9.

## Claims

1. A method for the removal of fluoride from waste water in the form of a slightly soluble salt, by mixing the waste water with a water soluble reagent, **characterized in** **that** the fluoride-containing waste water is thoroughly mixed with the water soluble reagent at a suitable pH in a reactor of a fluidized bed type, comprising an appropriate non-magnetic bed material which is sand, with an appropriate grain size on which the fluoride salt crystallizes exclusively out, whereby the bed material containing crystalline fluoride salt is from time to time removed from the reactor, and new bed material is added to the reactor.

2. A method according to claim 1, **characterized in** **that** the pH of the waste water in the reactor is adjusted to a value from 3 to 14.

3. A method according to claim 1, **characterized in** **that** sand with a grain size of 0.1-0.3 mm is used.

4. A method according to claims 1-3, **characterized** **in that** as reagent a calcium- or magnesium-containing solution is used.

## Patentansprüche

1. Verfahren zur Entfernung von Fluoriden aus Abwasser in Form eines schwach löslichen Salzes durch Mischen des Abwassers mit einem wasserlöslichen Reagenz, **dadurch gekennzeichnet**, daß das die Fluoride enthaltende Abwasser mit dem wasserlöslichen Reagenz bei einem geeigneten pH-Wert in einem Reaktor vom Fließbett-Typ gründlich vermischt wird, wobei der Reaktor als geeignetes nicht-magnetisches Bettmaterial Sand mit einer geeigneten Korngröße aufweist, auf dem ausschließlich das Fluoridsalz auskristallisiert, wobei das kristallines Fluoridsalz enthaltende Bettmaterial von Zeit zu Zeit aus dem Reaktor entfernt und dem Reaktor neues Bettmaterial hinzugefügt wird.

2. Verfahren nach Anspruch 1, dadurch gekennzeichnet, daß der pH-Wert des Abwassers im Reaktor auf einen Wert von 3 bis 14 eingestellt wird.

3. Verfahren nach Anspruch 1, dadurch gekennzeichnet, daß Sand mit einer Korngröße von 0,1 bis 0,3 mm verwendet wird.

4. Verfahren nach den Ansprüchen 1 bis 3, dadurch gekennzeichnet, daß als Reagenz eine Kalzium oder Magnesium enthaltende Lösung verwendet wird.

## Revendications

1. Procédé pour l'élimination de fluorures, à partir d'eau usée, sous forme d'un sel faiblement soluble, par mélange de l'eau usée avec un réactif hydrosoluble, caractérisé en ce que l'eau usée contenant des fluorures est minutieusement mélangée avec le réactif hydrosoluble à un pH approprié dans un réacteur de type à lit fluidisé, comprenant un matériau pour lit fluidisé non magnétique approprié qui est du sable, avec une taille de grain appropriée, sur lequel le sel de fluorure cristallise exclusivement, le matériau pour lit fluidisé contenant le sel de fluorure cristallin étant de temps en temps éliminé du réacteur, et du matériau pour lit fluidisé nouveau étant ajouté dans le réacteur.

2. Procédé selon la revendication 1, caractérisé en ce que le pH de l'eau usée dans le réacteur est réglé à une valeur comprise entre 3 et 14.

3. Procédé selon la revendication 1, caractérisé en ce que l'on utilise du sable avec une taille de grain comprise entre 0,1 et 0,3 mm.

4. Procédé selon les revendications 1 à 3, caractérisé en ce que l'on utilise comme réactif une solution contenant du calcium ou du magnésium.
